## Europäisches Patentamt

## European Patent Office

## Office européen des brevets

(11) Veröffentlichungsnummer: **0 170 846**
**B1**

(12) # EUROPÄISCHE PATENTSCHRIFT

(45) Veröffentlichungstag der Patentschrift:
**27.09.89**

(51) Int. Cl.⁴: **B 60 V 1/22**

(21) Anmeldenummer: **85107693.5**

(22) Anmeldetag: **21.06.85**

(54) **Bodeneffekt-Fahrzeug.**

(30) Priorität: **01.08.84 DE 3428281**

(43) Veröffentlichungstag der Anmeldung:
**12.02.86 Patentblatt 86/7**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**DE-A- 1 146 774**
**GB-A- 593 032**
**US-A- 2 364 676**
**US-A- 2 364 677**
**US-A- 2 387 627**
**US-A- 2 390 859**
**US-A- 2 469 619**
**US-A- 3 126 169**
**US-A- 3 486 577**

(73) Patentinhaber: **BLUM, Albert, Scheiderhöhe,
D-5204 Lohmar 1 (DE)**

(72) Erfinder: **BLUM, Albert, Scheiderhöhe,
D-5204 Lohmar 1 (DE)**

(74) Vertreter: **Lippert, Hans-Joachim, Dipl.-Ing. et al,
Dipl.-Ing. W. Dahlke Dipl.-Ing. H.-J. Lippert
Patentanwälte Frankenforster Strasse 137,
D-5060 Bergisch Gladbach 3 (DE)**

# Beschreibung

Bei Bodeneffekt-Fahrzeugen erzeugt die in den Hohlraum unter dem Tragkörper einströmende Luft beim Flug in Boden- oder Wasseroberflächennähe einen Luftstau, der ähnlich wie bei einem Luftkissen wirkt und auf dem das Fahrzeug gleiten kann. Daduch wird der Widerstand erheblich gemindert und das Fahrzeug wird in einer der eingestellten Triebwerksleistung entsprechenden Höhe automatisch stabilisiert. Aufgrund des geringen Widerstandes kommt das Fahrzeug mit geringen Antriebsleistungen aus.

Bei einem bekannten Bodeneffekt-Fahrzeug der genannten Art (GB-Z.: Air-Cushion Vehicles, Flight International Supplement vom 25. Juli 1964, Seite 80), welches als Ein-Propeller-Flugzeug konstruiert ist, ist der als Propeller ausgebildete Schubantrieb unmittelbar vor dem Tragkörper angeordnet, wobei die Rotationsachse des Propellers oberhalb der Tragflächen liegt. Bei diesem bekannten Fahrzeug dient also der Propeller in erster Linie zur Erzeugung eines Schubes, wobei die durch den Propeller erzeugte Luftströmung im Stand des Fahrzeugs sowie im Anfahrstadium im wesentlichen über das Fahrzeug und über die Tragflächen hinweggeht. Erst bei höheren Geschwindigkeiten baut sich durch die Fahrtgeschwindigkeit ein Luftstau unter dem Tragkörper auf, der zum Wirksamwerden des Bodeneffektes führt.

Ferner sind beispielsweise aus der US-A 2 387 627 Kompressionsflugzeuge bekannt. Diese bestehen aus einem zentralen, flügelartigen Tragkörper, einem im vorderen Bereich des Tragkörpers angeordneten Schuberzeuger, einem Leitwerk sowie einer oben auf dem Tragkörper angeordneten Kabine für Personen und ggfs. für Nutzlasten. Vom Schuberzeuger aus verläuft ein Luftströmungskanal zur Unterseite des Tragkörpers und leitet den gesamten vom Schuberzeuger erzeugten Luftstrom unter den Tragkörper. Der Luftströmungskanal ist in seinem Austrittsbereich durch ein nach oben gewölbtes und nach unten freies, dachartiges Führungsprofil gebildet, das sich nach hinten verbreitert. Die bekannten Kompressionsflugzeuge weisen zwar ähnliche Merkmale auf wie Bodeneffekt-Fahrzeuge, jedoch wird mit Kompressionsflugzeugen eine ganz andere Zielrichtung verfolgt. Sie sind für schwere Lasten ausgelegt und sollen mit sehr hohen Geschwindigkeiten vom Boden abheben. Dem entspricht konstruktionstechnisch die Massnahme, dass der von den Schuberzeugern gebildete Luftstrom in einem Abstand von der Vorderkante des Tragkörpers unter diesen gedrückt wird, wodurch unter Zuhilfenahme seitlich angebrachter Dichtungsschürzen ein statisches Luftpolster aufgebaut wird, welches anstelle eines Fahrwerks das gesamte Flugzeug bei Bodenberührung trägt. Erst bei Erreichen grösserer Geschwindigkeiten in der Vorschubphase nach dem Abheben, wenn auch der vordere Tragkörperteil aufgrund der Vorwärtsgeschwindigkeit angeströmt wird, ist das Tragkörperprofil voll wirksam, so dass ein aerodynamischer Antrieb erzeugt wird. Bei Bodeneffekt-Fahrzeugen kommt es hingegen darauf an, dass der nicht mit einem statischen Luftpolster vergleichbare Bodeneffekt für den normalen Fahrtbetrieb auf Seen, Flüssen, Sümpfen und dergleichen so wirksam wie möglich ausgenutzt wird.

Der Erfindung liegt die Aufgabe zugrunde, ein Bodeneffekt-Fahrzeug der eingangs genannten Art derart weiterzubilden, dass die Bodeneffektwirkung verstärkt wird, wobei der Bodeneffekt auch bereits bei geringen Geschwindigkeiten wirksam werden soll.

Erfindungsgemäss wird diese Aufgabe durch die Merkmale des Anspruchs 1 gelöst.

Durch die erfindungsgemässe Konstruktion wird erreicht, dass die von dem Schubantrieb erzeugte Luftströmung nicht nur den Vortrieb, sondern durch die Anstellung des Tragkörpers gleichzeitig auch einen dynamischen Luftstau unter dem flächenhaften Tragkörper erzeugt, wodurch unmittelbar ein kräftiger Auftrieb durch Bodeneffekt geschaffen wird und damit einhergehend im Hinblick auf den Wegfall der Bodenreibung sich eine rasche Geschwindigkeitszunahme einstellen kann. In der Startphase ist es zweckmässig, die Spitze des Fahrzeugs relativ hoch zu stellen. Dadurch wird einerseits das Startverhalten verbessert und andererseits wird, insbesondere wenn der Schuberzeuger eine Luftschraube ist, eine Wasser- und Bodenberührung der Luftschraube wirksam vermieden. Aufgrund der Tatsache, dass sich das Führungsprofil zum Tragkörper hin verbreitert und im Anschlussbereich an den Tragkörper annähernd die gleiche Breite wie diese aufweist, ist gewährleistet, dass die gesamte Breite des Tragkörpers auch bereits bei geringen Geschwindigkeiten angeströmt wird.

Vorzugsweise ist die Bugspitze im vordersten Bereich als Einlaufdiffusor ausgebildet, wobei der Schuberzeuger zweckmässig im vorderen Abschnitt des Einlaufdiffusors angeordnet ist.

Das Führungsprofil des Lufströmungskanals kann sich dabei unmittelbar an den Einlaufdiffusor anschliessen. Zur optimalen Verteilung des durch den Schuberzeuger erzeugten Luftstroms über die gesamte Breite des Tragkörpers können an der Unterseite des Führungsprofils Luftleitbleche angeordnet sein. Diese können entsprechend dem Flugzustand verstellbar und bei hohen Geschwindigkeiten eventuell sogar in das Profil einfahrbar sein.

Der Tragkörper des Fahrzeugs kann ein Delta-Flügel sein. Die Deltaspitze des Tragkörpers kann dabei beispielsweise nach hinten weisen. Die hintere Deltaspitze des Tragkörpers ist zweckmässig abgestumpft.

An seiner Unterseite überspannt der Tragkörper zweckmässig einen nach oben gewölbten Raum, während die seitlichen und hinteren Ränder nach unten gezogen sind. Durch diese Form wird die Bildung des Luftstaus unterstützt.

Der hintere Rand und/oder die seitlichen Ränder des Tragkörpers können mit verstellbaren Klappen versehen sein, so dass sich die Bildung des Luftstaus an den jeweiligen Flugzustand anpassen lässt.

Da die Vorteile des Bodeneffekt-Fahrzeugs insbesondere in Verbindung mit Wasseroberflächen zum Tragen kommen, sind die Fahrwerke vorzugsweise als Schwimmer ausgebildet. Damit aber das Fahrzeug auch auf festen Pisten starten und landen kann, können zusätzlich auch Fahrwerke angeordnet sein. Wenn der Tragkörper als Delta-Flügel ausgebildet ist, sind die Schwimmer und/oder Fahrwerke zweckmässig an oder unter den beiden Seitenenden des Delta-Flügels angeordnet.

Die Kippachsen der Schwimmer und/oder Fahrwerke können an ihren hinteren Enden angeordnet sein. Dadurch wird der Schwenkpunkt des Fahrzeugs relativ weit nach hinten verlegt, wodurch die Wirksamkeit der Schwenkbewegung verbessert wird.

Die Schwimmer und/oder Fahrwerke oder diejenigen Teile der Schwimmer, die ins Wasser eintauchen bzw. diejenigen Teile der Fahrwerke, die mit dem Boden in Berührung kommen, können relaiv zu dem Fahrzeug elastisch federnd eingebaut sein. Dadurch wird das Fahrverhalten des Fahrzeugs bei Wasser- oder Bodenberührung verbessert.

Jeder Schwimmer kann aus einer oberen und einer unteren Schale bestehen, die dicht ineinander eingreifen, wobei die obere Schale starr mit dem Fahrzeug verbunden ist, während die untere Schale relativ zu der oberen verstellbar ist.

Zum Verschwenken der Schwimmer und/oder Fahrwerke bzw. der Schalen relativ zueinander, kann eine Kolben-Zylinder-Einheit vorgesehen sein, die gleichzeitig als Feder-Dämpfer-Element ausgebildet ist.

Bei grösseren Fahrzeugen bzw. bei Fahrzeugen, die grössere Lasten transportieren sollen, kann der Schuberzeuger auch zwei oder mehr nebeneinander angeordnete Triebwerke aufweisen.

Das erfindungsgemässe Bodeneffekt-Fahrzeug kann bei entsprechender Ausstattung auch ohne weiteres als Flugzeug verwendet werden. Zu diesem Zweck sind vorzugsweise an dem Delta-Flügel auf beiden Seiten zusätzliche Tragflächen vorgesehen, die den Auftrieb erhöhen.

Die Erfindung ist in der Zeichnung beispielsweise veranschaulicht und im nachstehenden im einzelnen anhand der Zeichnung beschrieben. Es zeigen:

Fig. 1 die Frontansicht eines Ausführungsbeispiels eines Bodeneffekt-Fahrzeug,

Fig. 2 eine Draufsicht auf das Fahrzeug gemäss Fig. 1,

Fig. 3 eine Seitenansicht des Fahrzeugs gemäss Fig. 1,

Fig. 4 einen Schnitt entlang der Linie IV–IV aus Fig. 3,

Fig. 5 einen Schnitt entlang der Linie V–V aus Fig. 3,

Fig. 6 einen Schnitt entlang der Linie VI–VI aus Fig. 3,

Fig. 7 einen Schnitt entlang der Linie VII–VII aus Fig. 3,

Fig. 8 drei verschiedene Betriebsphasen des Fahrzeugs.

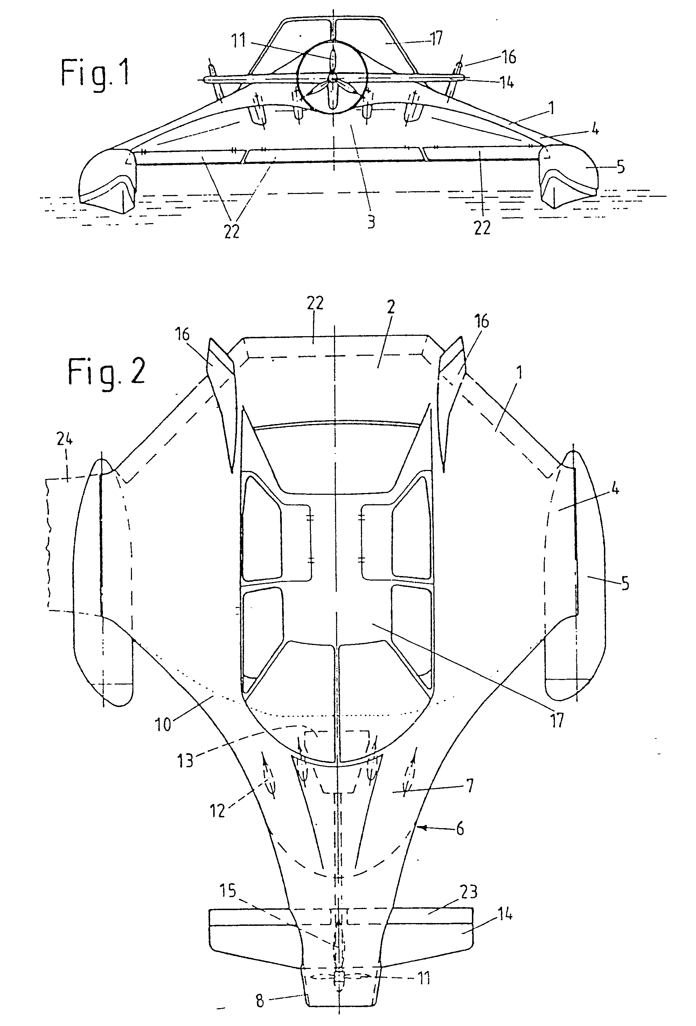

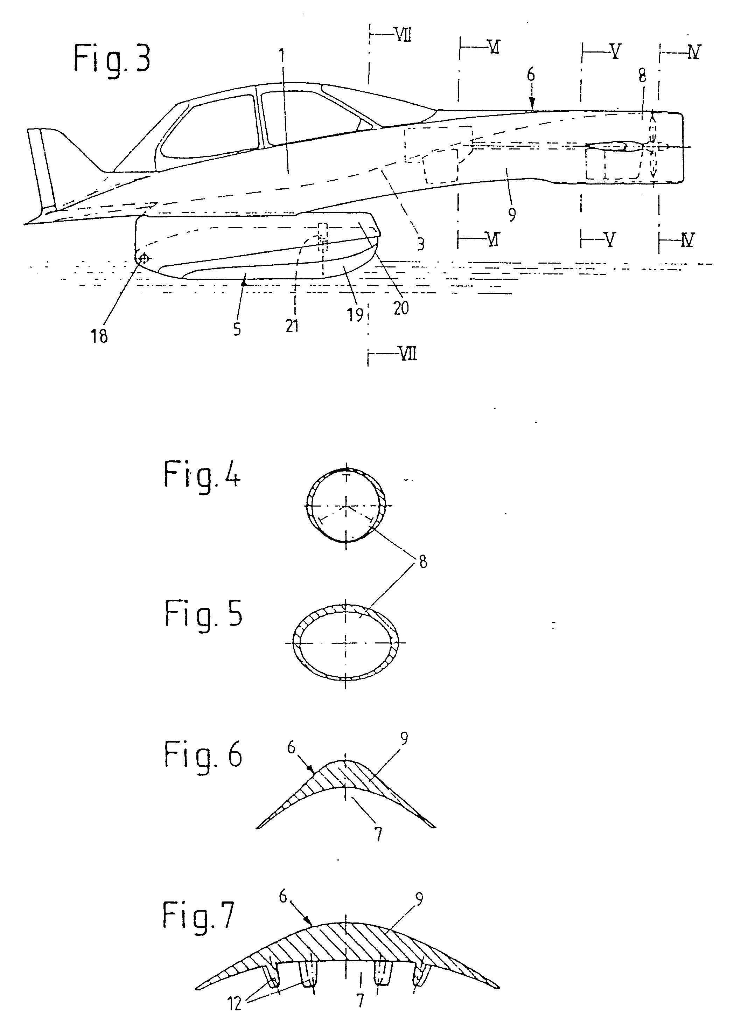

Nach Fig. 1 bis 3 der Zeichnung besteht das Bodeneffekt-Fahrzeug im wesentlichen aus einem zentralen, flächenhaften Tragkörper 1, der die Form eines Flügels aufweist. Die Form des Flügels ist an einem Delta-Flügel angelehnt, dessen Spitze 2 nach hinten gerichtet ist. In dem dargestellten Ausführungsbeispiel ist allerdings die Spitze abgestumpft.

Der Delta-Flügel ist an seiner Unterseite nach oben gewölbt ausgebildet und überspannt einen Hohlraum 3.

Im Bereich der beidseitig nach aussen gerichteten Ecken 4 des Delta-Flügels sind Schwimmer 5 angeordnet, die ein Schwimmen des Fahrzeugs auf einer Wasseroberfläche ermöglichen. Anstelle der Schwimmer 5 können ohne weiteres auch Fahrwerke vorgesehen sein, so dass das Fahrzeug auf festen Pisten starten und landen kann. Alternativ ist auch eine Kombination von Schwimmern und Fahrwerken möglich.

Dem Tragkörper 1 ist eine weit nach vorn gezogene Bugspitze 6 vorgeschaltet, die einen unter den Tragkörper 1 gerichteten Luftströmungskanal 7 bildet. Das vordere Ende der Bugspitze 6 ist als Einlaufdiffusor 8 ausgebildet, der im Bereich der Schnitte IV und V eine geschlossene, sich allmählich nach hinten verbreiternde Gestalt aufweist. Hinter dem Einlaufdiffusor ist der Luftströmungskanal 7 durch ein nach oben gewölbtes und nach unten freies, dachartiges Führungsprofil 9 gebildet, das sich zum Tragkörper 1 hin verbreitert und im Anschlussbereich 10, der in Fig. 1 punktiert dargestellt ist, annähernd die gleiche Breite wie der Tragkörper aufweist. Das eigentliche, den Auftrieb erzeugende Flügelprofil beginnt also erst im Anschlussbereich 10, während die nach vorn gezogene Bugspitze im wesentlichen zur Leitung der Luft unter den Tragkörper dient.

Im vorderen Abschnitt des Einlaufdiffusors 8 ist ein als Luftschraube 11 ausgebildeter Schuberzeuger angeordnet, der in Kombination mit dem Luftströmungskanal 7 bereits im Stand seine gesamte Förderluft unter den Tragkörper drückt, so dass sich unter diesem ein Luftpolster aufbaut. Damit tatsächlich die gesamte Breite des Tragkörpers 1 von der aus dem Luftströmungskanal 7 herangeführten Luft angeströmt wird, sind im hinteren Abschnitt des Luftströmungskanals 7 an der Unterseite der Bugspitze 6 Luftleitbleche 12 vorgesehen, die die Luft bereits im Stand des Fahrzeugs über die gesamte Breite des Flügelprofils verteilen. Die Luftleitbleche 12 sind verstellbar, so dass ihre Stellung dem jeweiligen Flugzustand angepasst werden kann.

Die Antriebsmaschine 13 der Luftschraube 11 ist relativ weit nach hinten versetzt angeordnet, damit der Schwerpunkt des Fahrzeugs nicht zu weit vorn liegt.

Zur Steuerung des Fahrzeugs dienen verschiedene Leitwerke. Im vorderen Bereich der Bugspitze 6 unmittelbar hinter der Luftschraube 11 ist ein beidseitiges Höhenleitwerk 14 vorgesehen, das teilweise zu beiden Seiten der Bugspitze 6 liegt und sich darüber hinaus quer durch den Luftströmungskanal 7 erstreckt. Im Bereich des Luftströmungskanals 7 ist auch ein kleines Seitenleitwerk 15 angeordnet. Zusätzlich sind oben auf dem hinteren Ende des Tragkörpers 1 zwei in seitlichem Abstand voneinander angeordnete grössere Seitenleitwerke 16 vorgesehen.

Oben auf dem Tragkörper 1 befindet sich eine Kabine 17, die bei den in der Zeichnung dargestellten Ausführungsbeispielen Platz für vier bis sechs Personen und zusätzlich für Gepäck bietet.

Insbesondere zur Erleichteurng des Startens und Landens sind die zu beiden Seiten des Tragkörpers 1 angeordneten Schwimmer 5 in einer vertikalen, parallel zur Fahrtrichtung liegenden Ebene kippbar. Die beiden Kippachsen 18 der Schwimmer 5 sind dabei im Bereich ihrer hinteren Enden angeordnet. Bei dem in der Zeichnung dargestellten Ausführungsbeispiel bestehen die Schwimmer 5 aus zwei schalenförmigen Teilen 19 und 20, wobei die obere Schale 20 fest an dem Tragkörper 1 sitzt, während die untere, in das Wasser eintauchende Schale 19 über die Kippachse 18 an der oberen Schale angelenkt und wasserdicht gegenüber dieser abgedichtet ist. Zum Verschwenken der unteren Schwimmerschale 19 dient eine Kolben-Zylinder-Einheit 21, die gleichzeitig als Feder-Dämpfer-Element wirkt.

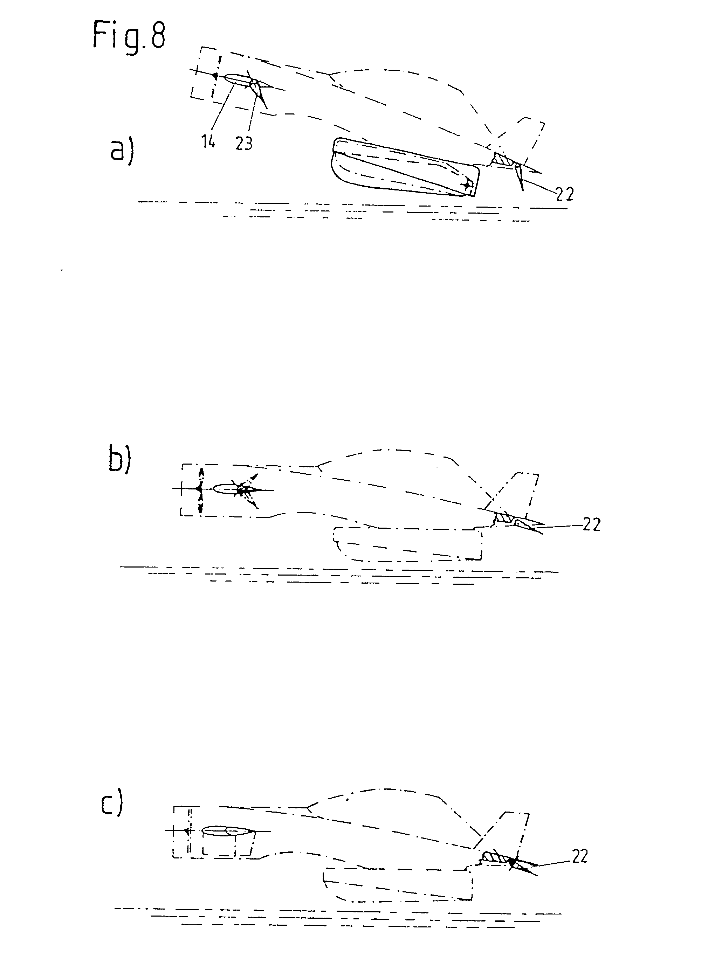

In der in Fig. 8a veranschaulichten Startphase befinden sich die Schwimmer 5 in ihrer am weitesten ausgefahrenen Kipplage, so dass das vordere Ende der Bugspitze 6 schräg nach oben weist. Bereits bevor sich das Fahrzeug in Bewegung setzt, wird die gesamte, durch den Schuberzeuger geförderte Schubluft unter den Tragkörper 1 geleitet. Damit sich unter dem Tragkörper 1 ein Luftstau ausbilden kann, sind am hinteren und an den seitlichen Rändern des Delta-Flügels vorgesehene Luftklappen 22 in ihre tiefste Stellung geschwenkt, so dass die Luft aus dem Hohlraum 3 nicht so schnell entweichen kann. Durch den Bodeneffekt gewinnt das Fahrzeug sehr schnell an Fahrt und hebt schon nach einer kurzen Startstrecke leicht vom Wasser ab. Damit auch in dieser Startphase, wenn die Schwimmer 5 nicht mehr oder nicht mehr ganz in das Wasser eintauchen, die schräg nach oben gerichtete Starthaltung beibehalten wird, sind die Steuerklappen 23 des Leitwerks 14 schräg nach unten gerichtet. Wenn das Fahrzeug keine Wasserberührung mehr hat und seine stabile Reiselage einnehmen soll, werden gemäss Fig. 8b die Steuerklappen 23 in die entgegengesetzte Lage geschwenkt, bis die Bugspitze 6 eine etwa horizontale Stellung einnimmt. Gleichzeitig werden die Luftklappen 22 am hinteren Rand des Delta-Flügels nach oben geschwenkt, um den Luftwiderstand zu reduzieren. Wenn das Fahrzeug dann seine endgültige Reiselage eingenommen hat, werden die Steuerklappen 23 des Höhenleitwerks 14 in ihre in Fig. 8b dargestellte neutrale Lage geschwenkt.

Zur Einleitung der Landung wird das Fahrzeug durch entsprechende Betätigung der Steuerklappen 23 sowie der Luftklappen 22 in die in Fig. 8a dargestellte Lage gebracht und die Schwimmer 5 werden in ihre Kippstellung gefahren, so dass das Fahrzeug auch noch nach dem Aufsetzen seine Schräglage mit angehobener Bugspitze beibehält.

Das beschriebene Bodeneffekt-Fahrzeug ist äusserst wirtschaftlich. Das Fahrzeug erhält bereits unmittelbar nach dem Anfahren aufgrund des Bodeneffektes bei relativ geringen Geschwindigkeiten einen starken Auftrieb, so dass der Fahrtwiderstand stark reduziert wird und das Fahrzeug relativ schnell abheben kann. Die Fahrtgeschwindigkeit kann ohne grösseren Energieaufwand schnell erhöht werden.

Das Fahrzeug ist auch sehr vielfältig in seiner Anwendung. Bei Ausrüstung mit einer Luftschraube kann das Fahrzeug als einfaches, schnellfahrendes Boot eingesetzt werden, das sich mit wachsender Geschwindigkeit leicht aus dem Wasser heraushebt. In der nächsten Ausbaustufe kann das Fahrzeug, das entweder mit einer Luftschraube oder auch mit einem Strahltriebwerk ausgerüstet sein kann, als Bodenef-fekt-Fahrzeug verwendet werden, welches in einem Abstand über eine Wasseroberfläche oder über einem ebenflächigen Boden schweben kann. Starts und Landungen sind je nach Ausrüstung sowohl auf dem Wasser als auch auf Pisten möglich. In den folgenden Ausbaustufen ist das Fahrzeug als Flugboot und auch als Flugzeug einsetzfähig. Wenn das Fahrzeug als Flugzeug verwendet werden soll, können zur Erhöhung des Auftriebs auf beiden Seiten des Delta-Flügels zusätzliche Tragflächen 24 vorgesehen sein.

**Patentansprüche**

1. Bodeneffekt-Fahrzeug mit einem zentralen, flügelartigen Tragkörper (1), unter dem Tragkörper angeordneten Schwimmern (5) und/oder Fahrwerken, einem vor dem Tragkörper (1) angeordneten Schuberzeuger (11), einem Leitwerk (14, 15, 16) sowie einer oben auf dem Tragkörper (1) angeordneten Kabine (17) für mindestens eine Person und gegebenenfalls für Nutzlasten, wobei dem Tragkörper (1) ein langgestreckter Bugteil (6) vorgeschaltet ist, der Bugteil (6) einen unter den Tragkörper (1) gerichteten Luftströmungskanal (7) aufweist, der den gesamten vom Schuberzeuger (11) erzeugten Luftstrom unter den Tragkörper (1) leitet, der Schuberzeuger (11) unter dem vorderen Bereich des Bugteils (6) in oder unmittelbar vor dem Luftströmungskanal (7) angeordnet ist, der Luftströmungskanal (7) durch ein nach oben gewölbtes und nach unten freies, dachartiges Führungsprofil (9) im Bereich stromabwärts vom Schuberzeuger (11) gebildet ist, das Führungsprofil (9) zum Tragkörper (1) hin verbreitert ist, das Führungsprofil (9) im Anschluss an den Tragkörper (1) annähernd die gleiche Breite wie dieser aufweist und die Anstellung des Tragkörpers (1) im Zustand der Wasser- bzw. Bodenberührung durch Kippen der Schwimmer (5) und/oder Fahrwerke in einer vertikalen, parallel zur Fahrtrichtung liegenenden Ebene veränderbar ist.

2. Bodeneffekt-Fahrzeug nach Anspruch 1, wobei die Buspitze (6) im vordersten Bereich als Einlaufdiffusor (8) ausgebildet ist.

3. Bodeneffekt-Fahrzeug nach Anspruch 2, wobei der Schuberzeuger (11) im vorderen Abschnitt des Einlaufdiffusors (8) angeordnet ist.

4. Bodeneffekt-Fahrzeug nach Anspruch 2 oder 3, wobei sich das Führungsprofil (9) des Luftströmungskanals (7) an den Einlaufdiffusor (8) anschliesst.

5. Bodeneffekt-Fahrzeug nach einem der Ansprüche 1 bis 4, wobei an der Unterseite des Führungsprofils (9) Luftleitbleche (12) zur optimalen Verteilung des durch den Schuberzeuger erzeugten Luftstroms über die gesamte Breite des Tragkörpers (1) vorgesehen sind.

6. Bodeneffekt-Fahrzeug nach einem der Ansprüche 1 bis 5, wobei der Tragkörper (1) ein Delta-Flügel ist.

7. Bodeneffekt-Fahrzeug nach Anspruch 6, wobei die Deltaspitze des Tragkörpers (1) nach hinten weist.

8. Bodeneffekt-Fahrzeug nach Anspruch 7, wobei die hintere Deltaspitze (2) des Tragkörpers abgestumpft ist.

9. Bodeneffekt-Fahrzeug nach einem der Ansprüche 1 bis 8, wobei der Tragkörper (1) an seiner Unterseite einen nach oben gewölbten Raum (3) überspannt, während die seitlichen und hinteren Ränder nach unten gezogen sind.

10. Bodeneffekt-Fahrzeug nach Anspruch 8 und 9, wobei der hintere Rand und/oder die seitlichen Ränder des Tragkörpers mit verstellbaren Klappen (22) versehen sind.

11. Bodeneffekt-Fahrzeug nach einem der Ansprüche 6 bis 10, wobei die Schwimmer (5) und/oder Fahrwerke an oder unter den beiden Seitenenden des Delta-Flügels angeordnet sind.

12. Bodeneffekt-Fahrzeug nach einem der Ansprüche 1 bis 11, wobei die Kippachsen (18) der Schwimmer (5) und/oder Fahrwerke an ihren hinteren Enden angeordnet sind.

13. Bodeneffekt-Fahrzeug nach Anspruch 11 oder 12, wobei die Schwimmer (5) und/oder Fahrwerke oder diejenigen Teile (19) der Schwimmer (5), die ins Wasser eintauchen, bzw. diejenigen Teile der Fahrwerke, die mit dem Boden in Berührung kommen, relativ zu dem Fahrzeug elastisch federnd eingebaut sind.

14. Bodeneffekt-Fahrzeug nach Anspruch 12 oder 13, wobei jeder Schwimmer (5) aus einer oberen (20) und einer unteren Schale (19) besteht, die dicht ineinander eingreifen, die obere Schale (20) starr mit dem Fahrzeug verbunden ist und die untere Schale (19) relativ zu der oberen Schale verstellbar ist.

15. Bodeneffekt-Fahrzeug nach einem der Ansprüche 12 bis 14, wobei zum Verschwenken der Schwimmer und/oder Fahrwerke eine Kolben-Zylinder-Einheit (21) vorgesehen ist, die gleichzeitig als Feder-Dämpfer-Element ausgebildet ist.

16. Bodeneffekt-Fahrzeug nach einem der Ansprüche 1 bis 15, wobei der Schuberzeuger (11) zwei oder mehr nebeneinander angeordnete Triebwerke aufweist.

17. Bodeneffekt-Fahrzeug nach einem der Ansprüche 6 bis 16, wobei an dem Delta-Flügel auf beiden Seiten zusätzliche Tragflächen (24) vorgesehen sind.

## Claims

1. Ground effect vehicle with a central, wing-like support body (1), floats (5) and/or undercarriage units located on both sides of the support body (1), a thrust generator (11) located in front of the support body (1), a control surface (14, 15, 16) and a cabin (17), located on top of the support body (1), for at least one person and, if required, for payloads, wherein an elongated nose (6) is located in front of the support body (1), the nose (6) comprises an airflow duct (7) directed under the support body (1), which guides the whole airflow generated by the thrust generator (11) under the support body (1), the thrust generator (11) is located under the front section of the nose (6) in or directly in front of the airflow duct (7), the airflow duct (7) is formed by a roof-like guide profile (9), cambered towards the top and open towards the bottom, which guide profile (9) is located in the area downstream of the thrust generator (11), the guide profile (9) widens towards the support body (1), the guide profile (9) has approximately the same width as the support body (1) in the region in which it joins the latter, and the incidence of the support body (1), in the state of contacting the water or the ground, respectively, is adjustable by tipping the floats (5) and/or undercarriage units in a vertical plane laying parallel to the diretion of travel.

2. Ground effect vehicle according to claim 1, wherein the nose (6) is designed in the foremost region as an intake diffuser (8).

3. Ground effect vehicle according to claim 2, wherein the thrust generator (11) is located in the front section of the intake diffuser (8).

4. Ground effect vehicle according to claim 2 or 3, wherein the guide profile (9) follows on from the intake diffuser (8).

5. Ground effect vehicle according to one of the claims 1 to 4, wherein air guide vanes (12) are provided on the bottom of the guide profile (9) for the optimum distribution, over the total width of the support body (1), of the airflow generated by the thrust generator.

6. Ground effect vehicle according to one of the claims 1 to 5, wherein the support body (1) is a delta wing.

7. Ground effect vehicle according to claim 6, wherein the point of the delta of the support body (1) points rearwards.

8. Ground effect vehicle according to claim 7, wherein the rear point (2) of the delta of the support body is truncated.

9. Ground effect vehicle according to one of the claims 1 to 8, wherein the support body (1) bridges over an upwards cambered space (3), while the side and rear edges are drawn downwards.

10. Ground effect vehicle according to claim 8 and 9, wherein the rear edge and/or the side edges of the support body are provided with adjustable flaps (22).

11. Ground effect vehicle according to one of claims 6 to 10, wherein the floats (5) and/or undercarriage units are located on or under the two lateral ends of the delta wing.

12. Ground effect vehicle according to one of the claims 1 to 11, wherein the tipping axes (18) of the floats (5) and/or undercarriage units are located at their rear ends.

13. Ground effect vehicle according to claim 11 or 12, wherein the floats and/or undercarriage units, or those parts (19) of the floats (5) which penetrate into the water or those parts of the undercarriage units which come into contact with the ground, are installed so that they are elastically sprung relative to the vehicle.

14. Ground effect vehicle according to claim 12 or 13, wherein each float (5) consists of an upper shell (20) and a lower shell (19) with a leaktight mutual engagement, that the upper shell (20) is rigidly connected to the vehicle and that the lower shell (19) is adjustable relative to the upper shell.

15. Ground effect vehicle according to one of the claims 12 to 14, wherein a piston/cylinder unit (21), which is simultaneously designed as a spring/damper element, is provided for pivoting the floats and/or undercarriage units.

16. Ground effect vehicle according to one of the claims 1 to 15, wherein the thrust generator (11) has two or more engines located adjacent to one another.

17. Ground effect vehicle according to one of the claims 6 to 16, wherein additional support surfaces (24) are provided on both sides of the delta wing.

**Revendications**

1. Véhicule à effet de sol, comportant une carène centrale en forme d'aile (1), des flotteurs (5) et/ou des moyens de déplacement disposés au-dessous de la carène, un générateur de poussée (11) disposé en avant de la carène (1), des gouvernes (14, 15, 16), ainsi qu'une cabine (17) disposée en haut sur la carène (1) pour une personne au moins et éventuellement pour des charges utiles, un élément de proue de forme allongée (6) étant disposé en avant de la carène, l'élément de proue (6) comportant un canal d'écoulement d'air (7) qui s'étend au-dessous de la carène (1) et qui dirige au-dessous de la carène la totalité du courant d'air produit par le générateur de poussée (11), le générateur de poussée (11) étant disposé au-dessous de la partie avant de l'élément de proue (6), dans ou immédiatement avant le canal d'écoulement d'air (7), le canal d'écoulement d'air (7) étant formé, dans la région en aval du générateur de poussée (11), par un profilé de guidage en forme de toit (9) bombé vers le haut et libre vers le bas, le profilé de guidage (9) s'élargissant vers la carène (1), le profilé de guidage (9) présentant, à la suite de la carène (1), approximativement la même largeur que celle-ci et l'incidence de la carène (1) dans l'état de contact avec l'eau ou avec le sol pouvant être modifiée par pivotement des flotteurs (5) et/ou des moyens de déplacement dans un plan vertical parallèle à la direction de marche.

2. Véhicule à effet de sol selon la revendication 1, dans lequel le nez de proue (6) est réalisé sous la forme de diffuseur d'entrée (8) dans la région la plus antérieure.

3. Véhicule à effet de sol selon la revendication 2, dans lequel le générateur de poussée (11) est disposé dans la partie antérieure du diffuseur d'entrée (8).

4. Véhicule à effet de sol selon la revendication 2 ou 3, dans lequel le profilé de guidage (9) du canal d'écoulement d'air (7) fait suite au diffuseur d'entrée (8).

5. Véhicule à effet de sol selon l'une quelconque des revendications 1 à 4, dans lequel il est prévu, du côté inférieur du profilé de guidage (9), des tôles chicanes à air (12) pour une distribution optimale du courant d'air produit par le générateur de poussée sur toute la largeur de la carène (1).

6. Véhicule à effet de sol selon l'une quelconque des revendications 1 à 5, dans lequel carène (1) est une aile delta.

7. Véhicule à effet de sol selon la revendication 6, dans lequel la pointe du delta de la carène (1) est dirigée vers l'arrière.

8. Véhicule à effet de sol selon la revendication 7, dans lequel la pointe postérieure du delta de la carène (2) est tronquée.

9. Véhicule à effet de sol selon l'une quelconque des revendications 1 à 8, dans lequel la carène (1) recouvre, du côté inférieur, un espace bombé vers le haut (3), tandis que ses bords latéraux et postérieur sont rabattus vers le bas.

10. Véhicule à effet de sol selon la revendication 8 ou 9, dans lequel le bord postérieur et/ou les bords latéraux de la carène sont munis d'ailerons mobiles (22).

11. Véhicule à effet de sol selon l'une quelconque des revendications 6 à 10, dans lequel les flotteurs (5) et/ou moyens de déplacement sont disposés aux deux extrémités latérales de l'aile delta ou au-dessous de ces extrémités.

12. Véhicule à effet de sol selon l'une quelconque des revendications 1 à 11, dans lequel les axes de pivotement (18) des flotteurs (5) et/ou moyens de déplacement sont disposés aux extrémités postérieures de ceux-ci.

13. Véhicule à effet de sol selon la revendication 11 ou 12, dans lequel les flotteurs (5) et/ou moyens de déplacement ou les parties (19) des flotteurs (5) qui plongent dans l'eau ou les parties des moyens de déplacement qui prennent contact avec le sol sont montés en suspension élastique par rapport au véhicule.

14. Véhicule à effet de sol selon la revendication 12 ou 13, dans lequel chaque flotteur (5) se compose d'une coque supérieure (20) et d'une coque inférieure (19) qui s'emboîte de manière étanche l'une dans l'autre, la coque supérieure (20) étant fixée rigidement au véhicule et la coque inférieure (19) pouvant être déplacée par rapport à la coque supérieure.

15. Véhicule à effet de sol selon l'une quelconque des revendications 12 à 14, dans lequel il est prévu, pour faire pivoter les flotteurs et/ou moyens de déplacement, un vérin hydraulique ou pneumatique (21) qui est réalisé en même temps sous forme d'élément amortisseur à ressort.

16. Véhicule à effet de sol selon l'une quelconque des revendications 1 à 15, dans lequel le générateur de poussée (11) comporte deux ou plusieurs propulseurs disposés côte à côte.

17. Véhicule à effet de sol selon l'une quelconque des revendications 6 à 16, dans lequel il est prévu sur l'aile delta, des deux côtés, des surfaces portantes supplémentaires (24).

Fig.1

Fig. 2

Fig. 3

Fig. 4

Fig. 5

Fig. 6

Fig. 7

Fig.8

a)

14  23

22

b)

22

c)

22